(19) **Europäisches Patentamt**
**European Patent Office**
**Office européen des brevets**

(11) **EP 3 872 896 B1**

(12) **EUROPEAN PATENT SPECIFICATION**

(45) Date of publication and mention
of the grant of the patent:
**20.03.2024   Bulletin 2024/12**

(21) Application number: **19896343.1**

(22) Date of filing: **11.12.2019**

(51) International Patent Classification (IPC):
*H01M 4/13* $^{(2010.01)}$   *H01M 4/133* $^{(2010.01)}$
*H01M 4/48* $^{(2010.01)}$   *H01M 4/62* $^{(2006.01)}$
*H01M 4/36* $^{(2006.01)}$   *H01M 4/587* $^{(2010.01)}$
*H01M 10/052* $^{(2010.01)}$   *H01M 10/0525* $^{(2010.01)}$

(52) Cooperative Patent Classification (CPC):
**H01M 4/483; H01M 4/133; H01M 4/364;**
**H01M 4/587; H01M 4/62; H01M 4/625;**
H01M 10/0525; Y02E 60/10

(86) International application number:
**PCT/KR2019/017505**

(87) International publication number:
**WO 2020/122602 (18.06.2020 Gazette 2020/25)**

(54) **NEGATIVE ELECTRODE FOR LITHIUM SECONDARY BATTERY AND LITHIUM SECONDARY BATTERY INCLUDING THE SAME**

NEGATIVE ELEKTRODE FÜR LITHIUMSEKUNDÄRBATTERIE UND
LITHIUMSEKUNDÄRBATTERIE DAMIT

ELECTRODE NEGATIVE POUR BATTERIE SECONDAIRE AU LITHIUM ET BATTERIE
SECONDAIRE AU LITHIUM LA COMPRENANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.12.2018   KR 20180159388**

(43) Date of publication of application:
**01.09.2021   Bulletin 2021/35**

(73) Proprietor: **LG Energy Solution, Ltd.**
**Seoul 07335 (KR)**

(72) Inventors:
• **SHIN, Sun Young**
**Daejeon 34122 (KR)**

• **KIM, Je Young**
**Daejeon 34122 (KR)**
• **LEE, Yong Ju**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
EP-A1- 3 029 759      WO-A1-2018/097213
WO-A1-2018/123624      CN-A- 107 799 813
JP-A- 2010 170 943      JP-A- 2017 224 600
KR-A- 20170 111 746      KR-A- 20180 028 814
KR-A- 20190 096 649      KR-B1- 101 586 816

EP 3 872 896 B1

**Description**

**TECHNICAL FIELD**

**Cross-reference to Related Applications**

This application claims the benefit of Korean Patent Application No. 10-2018-0159388, filed on December 11, 2018, in the Korean Intellectual Property Office.

**Technical Field**

The present invention relates to a negative electrode for a lithium secondary battery and a lithium secondary battery including the negative electrode, and particularly, to a negative electrode for a lithium secondary battery, which may improve a decrease in early-cycle capacity and high-temperature storage performance by including a silicon oxide ($SiO_x$, $0<x<2$) composite containing magnesium (Mg) in a negative electrode active material and optimizing a type and an amount of a conductive agent, and a lithium secondary battery including the negative electrode.

**BACKGROUND ART**

Demand for secondary batteries as an energy source has been significantly increased as technology development and demand with respect to mobile devices have increased, and, among these secondary batteries, lithium secondary batteries having high energy density, high operating potential, long cycle life, and low self-discharging rate have been commercialized and widely used.

A metal oxide, such as $LiCoO_2$, $LiMnO_2$, $LiMn_2O_4$, or $LiCrO_2$, is being used as a positive electrode active material constituting a positive electrode of a lithium secondary battery, and metallic lithium, a carbon-based material, such as graphite or activated carbon, or a material, such as silicon oxide (SiOx), is being used as a negative electrode active material constituting a negative electrode. Among these negative electrode active materials, the metallic lithium has initially been mainly used, but, recently, the carbon-based material has been mainly used, because a phenomenon occurs in which the battery is destroyed by damage of a separator which is caused by the growth of lithium atoms on the surface of the metal lithium as charge and discharge cycles proceed. However, with respect to the carbon-based material, it is disadvantageous in that its capacity is small because its theoretical capacity is only about 400 mAh/g, and thus, various studies have been conducted to replace the carbon-based material by using a silicon (Si)-based material with high theoretical capacity (4,200 mAh/g) as a negative electrode active material.

EP 3 029 759 A1 describes an electrode composition for use in an electrochemical cell comprising a silicon alloy comprising silicon, iron and optionally carbon, a binder and a conductive additive comprising carbon nanotubes. WO 2018/123624 A1 describes a slurry composition for a nonaqueous secondary cell negative electrode containing a negative electrode active material that contains a lithium titanium oxide, a binder and an organic solvent. WO 2018/097213 A1 describes a negative electrode material including silicon oxide particles and a carbon material.

In order to improve energy density of the lithium secondary battery, a positive electrode active material with an increased nickel (Ni) content and a silicon-based negative electrode active material are being used. However, SiO among the silicon-based materials is advantageous in that its lifetime is long due to low swelling, but, since there is an issue of decrease in early-cycle capacity, there is a need to improve on this.

[Prior Art Document]

[Patent Document]

(Patent Document 1) KR1586816 B

**DISCLOSURE OF THE INVENTION**

**TECHNICAL PROBLEM**

An aspect of the present invention provides a negative electrode for a lithium secondary battery, which may improve a decrease in early-cycle capacity and high-temperature storage performance, and a lithium secondary battery including the negative electrode.

## TECHNICAL SOLUTION

According to an aspect of the present invention, there is provided a negative electrode for a lithium secondary battery which includes:

a negative electrode collector and a negative electrode active material layer formed on the negative electrode collector, wherein the negative electrode active material layer includes:

a negative electrode active material which includes a $SiO_x$) composite containing Mg, wherein $0<x<2$;
a line-type conductive agent as a first conductive agent; and
at least one of a point-type conductive agent and a flaky graphite-based conductive agent, as a second conductive agent,
wherein an amount of the first conductive agent is in a range of 0.5 wt% to 1.7 wt% based on a total weight of the negative electrode active material layer, and
a product of an amount in wt% and a Brunauer-Emmett-Teller (BET) specific surface area in $m^2/g$ of the second conductive agent has a value of 100 or less, wherein the line-type conductive agent comprises at least one selected from carbon nanotubes (CNTs) and carbon nanofibers, and wherein the point-type conductive agent comprises at least one carbon black selected from the group consisting of acetylene black, Ketjen black, channel black, furnace black, lamp black, and thermal black.

According to another aspect of the present invention, there is provided a lithium secondary battery including the negative electrode.

## ADVANTAGEOUS EFFECTS

Since a negative electrode of the present invention includes a silicon oxide ($SiO_x$, $0<x<2$) composite containing magnesium (Mg) in a negative electrode active material and optimizes a type and an amount of a conductive agent, both life characteristics (particularly, improvement in decrease in capacity in early cycles) and high-temperature storage performance of a lithium secondary battery including the negative electrode of the present invention are excellent.

## MODE FOR CARRYING OUT THE INVENTION

Hereinafter, the present invention will be described in more detail.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The expression "specific surface area" in the present specification is measured by a Brunauer-Emmett-Teller (BET) method, wherein, specifically, the specific surface area may be calculated from a nitrogen gas adsorption amount at a liquid nitrogen temperature (77K) using BELSORP-mini II by Bell Japan Inc.

### Negative Electrode

A negative electrode of the present invention is a negative electrode for a lithium secondary battery which includes:

a negative electrode collector and a negative electrode active material layer formed on the negative electrode collector, wherein the negative electrode active material layer includes:

a negative electrode active material which includes a $SiO_x$ composite containing Mg wherein $0<x<2$;
a line-type conductive agent as a first conductive agent; and
at least one of a point-type conductive agent and a flaky graphite-based conductive agent, as a second conductive agent,
wherein an amount of the first conductive agent is in a range of 0.5 wt% to 1.7 wt% based on a total weight of the negative electrode active material layer, and
a product of an amount in wt% and a BET specific surface area in $m^2/g$ of the second conductive agent has a value of 100 or less, wherein the line-type conductive agent comprises at least one selected from carbon nanotubes (CNTs) and carbon nanofibers, and wherein the point-type conductive agent comprises at least one carbon black selected from the group consisting of acetylene black, Ketjen black, channel black, furnace black, lamp black, and thermal black.

The negative electrode active material further includes graphite and may be a mixture of the silicon oxide ($SiO_x$, 0<x<2) composite containing Mg and the graphite. In this case, a weight ratio of the silicon oxide composite containing Mg : the graphite may be in a range of 1:99 to 50:50, for example, 3:95 to 20:80. If the silicon oxide composite is included in an amount of less than the above range, since an increase in energy density is difficult, it may be difficult to achieve a high-capacity battery, and, if the silicon oxide composite is included in an amount of greater than the above range, a degree of volume expansion of the negative electrode may be increased.

The silicon oxide composite containing Mg is a silicon oxide composite containing at least one silicate phase selected from the group consisting of $Mg_2SiO_4$ and $MgSiO_3$, wherein the silicon oxide composite containing Mg may include a carbon coating layer on a surface thereof.

Specifically, the silicon oxide composite containing Mg is formed by doping a silicon oxide with Mg, wherein the at least one silicate phase selected from the group consisting of $Mg_2SiO_4$ and $MgSiO_3$ may be present in the form of a domain in the silicon oxide composite by the doped Mg.

The line-type conductive agent, as the first conductive agent, comprises carbon nanotubes (CNTs) or carbon nanofibers, and the point-type conductive agent, as the second conductive agent, comprises at least one carbon black selected from the group consisting of acetylene black, Ketjen black, channel black, furnace black, lamp black, and thermal black.

The line-type conductive agent, as the first conductive agent, may be included in an amount of 0.5 wt% to 1.7 wt%, for example, 0.5 wt% to 1.5 wt% based on the total weight of the negative electrode active material.

In a case in which the line-type conductive agent is included in an amount of less than 0.5 wt%, since an electric path may be easily broken while the silicon oxide composite in the electrode undergoes repeated expansion/contraction during charge and discharge of lithium, the amount of the line-type conductive agent may not be enough to prevent this, and, in a case in which the line-type conductive agent is included in an amount of greater than 1.7 wt%, since electrode coating may be difficult or the line-type conductive agent may not be well dispersed due to an increase in viscosity of a slurry, the electrode may be in a poor condition.

A product of an amount and a BET specific surface area of the second conductive agent may be less than or equal to 100, and may specifically have a value of 30 to 100.

In a case in which the above value is greater than 100, since a side reaction with an electrolyte solution is increased when the battery is stored at high temperature, a film is increased and consumption of the electrolyte solution may be accelerated.

The point-type conductive agent, as the second conductive agent, may have a BET specific surface area of 30 $m^2$/g to 1,300 $m^2$/g, and the flaky graphite-based conductive agent may have a BET specific surface area of 3 $m^2$/g to 40 $m^2$/g.

Specifically, the point-type conductive agent may be Super C65 (BET=62 $m^2$/g), and the flaky graphite-based conductive agent may be SFG6L (BET=17 $m^2$/g).

In a case in which the second conductive agent is the point-type conductive agent, its amount may be 3.3 wt% or less, for example, 1.6 wt% or less, and, in a case in which the second conductive agent is the flaky graphite-based conductive agent, its amount may be 33.3 wt% or less, for example, 5.8 wt% or less.

Specifically, in a case in which the second conductive agent is Super C65 as the point-type conductive agent, an amount of the Super C65 may be 1.6 wt% or less, for example, 0.5 wt% to 1.6 wt%, and, in a case in which the second conductive agent is SFG6L as the flaky graphite-based conductive agent, an amount of the SFG6L may be 5.8 wt% or less, for example, 1.8 wt% to 5.8 wt%, wherein a product of the amount (wt%) and the BET specific surface area ($m^2$/g) of the second conductive agent may have a value of 100 or less, for example, 30 to 100.

Also, the negative electrode active material layer generally further includes a thickener and a binder.

As in the case of preparing a common negative electrode for a lithium secondary battery, a negative electrode slurry is prepared by dissolving or dispersing the negative electrode active material, the conductive agent, and/or the binder, in a solvent, and the negative electrode of the present invention may be prepared in such a manner that at least one surface of a negative electrode collector is coated with the negative electrode slurry, dried, and then pressed.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, microscopic irregularities may be formed on the surface of the negative electrode collector to improve the adhesion of the negative electrode active material. For example, the negative electrode collector may be used in various shapes such as a film, a sheet, a foil, a net, a porous body, a foam body, a non-woven fabric body, and the like.

The negative electrode active material may be included in an amount of 80 wt% to 99 wt%, for example, 85 wt% to 98 wt% based on the total weight of the negative electrode active material layer. When the negative electrode active material is included within the above-described amount range, excellent capacity characteristics may be exhibited.

The binder improves adhesion between negative electrode active material particles and adhesion between the negative electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the negative electrode active material layer.

The thickener may include methyl cellulose, ethyl cellulose, hydroxyethyl cellulose, benzyl cellulose, trityl cellulose, cyanoethyl cellulose, carboxymethyl cellulose (CMC), carboxyethyl cellulose, aminoethyl cellulose, nitrocellulose, cellulose ether, or carboxymethyl cellulose sodium salt (CMCNa). The thickener may be included in an amount of 1 wt% to 30 wt% based on the total weight of the negative electrode active material layer.

The solvent used in the preparation of the negative electrode slurry may be a solvent commonly used in the art, and, for example, dimethyl sulfoxide (DMSO), isopropyl alcohol, N-methylpyrrolidone (NMP), acetone, or water may be used alone or a mixture thereof may be used. An amount of the solvent used may be appropriately adjusted in consideration of a coating thickness of the slurry, manufacturing yield, and viscosity.

The negative electrode for a lithium secondary battery of the present invention includes the followings as essential elements: the negative electrode active material includes the silicon oxide composite containing Mg (Configuration 1), includes the line-type conductive agent, as the first conductive agent, in an amount of 0.5 wt% to 1.7 wt% based on the total weight of the negative electrode active material layer (Configuration 2), and includes at least one of the point-type conductive agent and the flaky graphite-based conductive agent, as the second conductive agent, wherein the product of the amount (wt%) of and the BET specific surface area ($m^2/g$) of the second conductive agent has a value of 100 or less (Configuration 3).

That is, when all of the three elements are essentially combined, a desired effect of the present invention may be obtained.

For example, in a case in which the conductive agent included in the negative electrode does not include both the first conductive agent and the second conductive agent, but includes only one of them; and, even if the conductive agent includes both the first conductive agent and the second conductive agent, in a case in which the amount of the first additive is outside the range of Configuration 2 or in a case in which the amount of the second additive does not satisfy the value of Configuration 3, it may be difficult for these cases to satisfy desired life characteristics and high-temperature storage performance (see Table 1 below).

In addition to their individual significance, the numerical ranges have an optimum effect when all three configurations are combined.

### Lithium Secondary Battery

Next, a lithium secondary battery according to the present invention will be described.

The negative electrode according to the present invention may be suitable for the preparation of the lithium secondary battery.

Specifically, the lithium secondary battery according to the present invention includes a negative electrode, a positive electrode disposed to face the negative electrode, a separator disposed between the negative electrode and the positive electrode, and an electrolyte, wherein the negative electrode is the above-described negative electrode according to the present invention.

The secondary battery may selectively further include a battery case accommodating an electrode assembly of the positive electrode, the negative electrode, and the separator, and a sealing member sealing the battery case.

The lithium secondary battery may be prepared according to a conventional secondary battery preparation method except that the negative electrode according to the present invention is used.

In the secondary battery, the positive electrode includes a positive electrode collector and a positive electrode active material layer disposed on at least one surface of the positive electrode collector.

The positive electrode may be prepared according to a conventional positive electrode preparation method generally known in the art. For example, the positive electrode may be prepared by a method in which a positive electrode slurry is prepared by dissolving or dispersing components constituting the positive electrode active material layer, that is, a positive electrode active material, a conductive agent, and/or a binder in a solvent, and at least one surface of the positive electrode collector is coated with the positive electrode slurry, dried, and then pressed, or may be prepared by casting the positive electrode slurry on a separate support and then laminating a film separated from the support on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 um, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

As the positive electrode active material, for example, a layered compound, such as lithium cobalt oxide ($LiCoO_2$) and lithium nickel oxide ($LiNiO_2$), or a compound substituted with at least one transition metal; lithium manganese oxides such as $Li_{1+y}Mn_{2-y}O_4$ (where y is 0 to 0.33), $LiMnO_3$, $LiMn_2O_3$, and $LiMnO_2$; lithium copper oxide ($Li_2CuO_2$) ; vanadium oxides such as $LiV_3O_8$, $Li_3VO_4$, $V_2O_5$, and $Cu_2V_2O_7$; Ni-site type lithium nickel oxide represented by the chemical formula $LiNi_{1-y}M_yO_2$ (where M = cobalt (Co), manganese (Mn), aluminum (Al), copper (Cu), iron (Fe), magnesium (Mg), boron (B), or gallium (Ga), and y is 0.01 to 0.3); lithium manganese composite oxide represented by the chemical formula $LiMn_{2-y}M_yO_2$ (where M = Co, nickel (Ni), Fe, chromium (Cr), zinc (Zn), or tantalum (Ta), and y is 0.01 to 0.1) or $Li_2Mn_3MO_8$ (where M = Fe, Co, Ni, Cu, or Zn); $LiMn_2O_4$ having a part of Li being substituted with alkaline earth metal ions; a disulfide compound; or $Fe_2(MoO_4)_3$ may be used, but the positive electrode active material is not limited thereto.

Also, the binder may be the same as that previously described in the negative electrode, and the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on a total weight of the positive electrode active material layer.

In the secondary battery, the separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

As the electrolyte, an organic liquid electrolyte, an inorganic liquid electrolyte, a solid polymer electrolyte, a gel-type polymer electrolyte, a solid inorganic electrolyte, or a molten-type inorganic electrolyte, which may be used in the preparation of the lithium secondary battery, may be used, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as Ra-CN (where Ra is a linear, branched, or cyclic hydrocarbon group having 2 to 20 carbon atoms and may include a double-bond, an aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate; pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

## Examples

Hereinafter, the present invention will be described in detail, according to examples. However, the following examples are merely presented to exemplify the present invention, not to limit the scope of the present invention.

A BET specific surface area of Super C65, as a conductive agent used in the following examples and comparative examples, was 62 $m^2/g$, and a BET specific surface area of SFG6L was 17 $m^2/g$. The specific surface area was measured by a BET method, wherein, specifically, the specific surface area may be calculated from a nitrogen gas adsorption amount at a liquid nitrogen temperature (77K) using BELSORP-mini II by Bell Japan Inc.

### Example 1.

"$SiO_x$ (0<x<2) containing at least one silicate phase selected from $Mg_2SiO_4$ and $MgSiO_3$ (silicon oxide composite containing Mg)", which was formed by doping $SiO_x$ (0<x<2) with Mg, and spherical natural graphite were mixed in a weight ratio of 15:85 to be used as a negative electrode active material, and the negative electrode active material, CNT, Super C65 (point-type conductive agent), CMC, and SBR were mixed in a weight ratio of 96:1:1:1:1 to prepare a negative electrode slurry. A copper current collector was coated with the negative electrode slurry, dried, and rolled to prepare a negative electrode.

### Example 2.

"$SiO_x$ (0<x<2) containing at least one silicate phase selected from $Mg_2SiO_4$ and $MgSiO_3$ (silicon oxide composite containing Mg)", which was formed by doping $SiO_x$ (0<x<2) with Mg, and spherical natural graphite were mixed in a weight ratio of 15:85 to be used as a negative electrode active material, and the negative electrode active material, CNT, SFG6L (flaky graphite-based conductive agent), CMC, and SBR were mixed in a weight ratio of 92:1:5:1:1 to prepare a negative electrode slurry. A copper current collector was coated with the negative electrode slurry, dried, and rolled to prepare a negative electrode.

### Example 3.

A negative electrode was prepared in the same manner as in Example 1 except that 0.75 wt% of the CNT was used in Example 1 to mix the negative electrode active material, CNT, Super C65 (point-type conductive agent), CMC, and SBR in a weight ratio of 96.25:0.75:1:1:1.

### Example 4.

A negative electrode was prepared in the same manner as in Example 2 except that 0.75 wt% of the CNT was used in Example 2 to mix the negative electrode active material, CNT, SFG6L (flaky graphite-based conductive agent), CMC, and SBR in a weight ratio of 92.25:0.75:5:1:1.

### Example 5.

A negative electrode was prepared in the same manner as in Example 1 except that 1.5 wt% of the CNT was used in Example 1 to mix the negative electrode active material, CNT, Super C65 (point-type conductive agent), CMC, and SBR in a weight ratio of 95.5:1.5:1:1:1.

**Example 6.**

A negative electrode was prepared in the same manner as in Example 2 except that 1.5 wt% of the CNT was used in Example 2 to mix the negative electrode active material, CNT, SFG6L (flaky graphite-based conductive agent), CMC, and SBR in a weight ratio of 91.5:1.5:5:1:1.

**Comparative Example 1.**

A negative electrode was prepared in the same manner as in Example 1 except that CNT was not used as a conductive agent and Super C65 was only used in Example 1 to mix the negative electrode active material, Super C65, CMC, and SBR in a weight ratio of 96:2:1:1.

**Comparative Example 2.**

A negative electrode was prepared in the same manner as in Example 2 except that CNT was not used as a conductive agent and SFG6L was only used in Example 2 to mix the negative electrode active material, SFG6L, CMC, and SBR in a weight ratio of 88:10:1:1.

**Comparative Example 3.**

A negative electrode was prepared in the same manner as in Example 1 except that 1 wt% of the CNT was only used as a conductive agent in Example 1 to mix the negative electrode active material, CNT, CMC, and SBR in a weight ratio of 97:1:1:1.

**Comparative Example 4.**

A negative electrode was prepared in the same manner as in Example 1 except that 0.4 wt% of the CNT was used in Example 1 to mix the negative electrode active material, CNT, Super C65, CMC, and SBR in a weight ratio of 96.6:0.4:1:1:1.

**Comparative Example 5.**

A negative electrode was prepared in the same manner as in Example 1 except that 2 wt% of the CNT was only used as a conductive agent in Example 1 to mix the negative electrode active material, CNT, CMC, and SBR in a weight ratio of 96:2:1:1.

**Comparative Example 6.**

A negative electrode was prepared in the same manner as in Example 1 except that 2 wt% of the Super C65 was used in Example 1 to mix the negative electrode active material, CNT, Super C65, CMC, and SBR in a weight ratio of 95:1:2:1:1.

**Comparative Example 7.**

A negative electrode was prepared in the same manner as in Example 2 except that 10 wt% of the SFG6L was used in Example 2 to mix the negative electrode active material, CNT, SFG6L, CMC, and SBR in a weight ratio of 87:1:10:1:1.

**Comparative Example 8.**

A negative electrode was prepared in the same manner as in Example 1 except that 2 wt% of the CNT was used in Example 1 to mix the negative electrode active material, CNT, Super C65, CMC, and SBR in a weight ratio of 95:2:1:1:1.

**Comparative Example 9.**

A negative electrode was prepared in the same manner as in Example 2 except that 2 wt% of the CNT was used in Example 2 to mix the negative electrode active material, CNT, SFG6L, CMC, and SBR in a weight ratio of 91:2:5:1:1.

**Comparative Example 10.**

A negative electrode was prepared in the same manner as in Example 2 except that 0.4 wt% of the CNT was used in Example 2 to mix the negative electrode active material, CNT, SFG6L, CMC, and SBR in a weight ratio of 92.6:0.4:5:1:1.

**Experimental Example 1. Capacity Retention after 100 Cycles at 25°C**

An NCM 811 positive electrode and the negative electrodes prepared in the examples and the comparative examples were used to prepare mono-cells.

Each of the mon-cells prepared using the negative electrodes prepared in the examples and the comparative examples was charged and discharged at 1C/1C at 25°C to confirm capacity retention after 100 cycles.

The capacity retention was measured according to the following Equation (1).

$$\text{Equation (1): capacity retention (\%) = \{discharge capacity after 100 cycles/discharge capacity after one cycle\} × 100}$$

The measured discharge capacities are presented in Table 1 below.

**Experimental Example 2. Capacity Retention After 2 Weeks Storage at 60°C**

An NCM 811 positive electrode and the negative electrodes prepared in the examples and the comparative examples were used to prepare mono-cells.

After each of the mon-cells prepared using the negative electrodes prepared in the examples and the comparative examples was charged to a state of charge (SOC) of 100 under a constant current/constant voltage (CC/CV) condition (specifically CC charged to 4.2 V and then CV charged to 0.05 C) at 25°C and then stored at a high temperature of 60°C for 2 weeks, capacity retention was again measured at room temperature, and the results thereof are presented in Table 1 below.

[Table 1]

| Negative electrodes used in mono-cells | Type and amount of conductive agent (% based on total weight of negative electrode active material layer) | Experimental Example 1. capacity retention (%) after 100 cycles at 1C/1C, 25°C | Experimental Example 2. capacity retention (%) after 2 weeks storage at 60°C, 100 SOC |
|---|---|---|---|
| Example 1 | CNT 1%, Super C65 1% | 91.8 | 94.7 |
| Example 2 | CNT 1%, SFG6L 5% | 92.3 | 94.1 |
| Example 3 | CNT 0.75%, Super C65 1% | 91.6 | 95.3 |
| Example 4 | CNT 0.75%, SFG6L 5% | 91.7 | 95.2 |
| Example 5 | CNT 1.5%, Super C65 1% | 92.4 | 94.3 |
| Example 6 | CNT 1.5%, SFG6L 5% | 92.2 | 93.9 |
| Comparative Example 1 | Super C65 2% | 78.2 | 83.5 |
| Comparative Example 2 | SFG6L 10% | 74.1 | 79.2 |
| Comparative Example 3 | CNT 1% | 87.6 | 89.3 |

(continued)

| Negative electrodes used in mono-cells | Type and amount of conductive agent (% based on total weight of negative electrode active material layer) | Experimental Example 1. capacity retention (%) after 100 cycles at 1C/1C, 25°C | Experimental Example 2. capacity retention (%) after 2 weeks storage at 60°C, 100 SOC |
|---|---|---|---|
| Comparative Example 4 | CNT 0.4%, Super C65 1% | 85.9 | 88.8 |
| Comparative Example 5 | CNT 2% | No cell assembly due to poor electrode condition | |
| Comparative Example 6 | CNT 1%, Super C65 2% | 92.5 | 89.1 |
| Comparative Example 7 | CNT 1%, SFG6L 10% | 90.4 | 87.6 |
| Comparative Example 8 | CNT 2%, Super C65 1% | No cell assembly due to poor electrode condition | |
| Comparative Example 9 | CNT 2%, SFG6L 5% | No cell assembly due to poor electrode condition | |
| Comparative Example 10 | CNT 0.4%, SFG6L 5% | 85.4 | 88.1 |

From the results of Table 1, it may be confirmed that both life characteristics (particularly, improvement in decrease in capacity in early cycles) and high-temperature storage performance of the cells using the negative electrodes of the examples were excellent in comparison to those of the cells using the negative electrodes of the comparative examples.

For example, in a case in which the conductive agent included in the negative electrode did not include both the first conductive agent and the second conductive agent but included only one of them (Comparative Examples 1, 2, 3, and 5); and, even if the conductive agent included both the first conductive agent and the second conductive agent, in a case in which the amount of the first conductive agent was outside the range of Configuration 2 (Comparative Examples 4, 8, 9, and 10) or in a case in which the amount of the second conductive agent did not satisfy the value of Configuration 3 (Comparative Examples 6 and 7), it was difficult for all of the cases to satisfy the desired life characteristics and high-temperature storage performance (see Table 1).

Specifically, in a case in which the first conductive agent was not included as the conductive agent, but the second conductive agent (Super C65 or SFG6L) was only included (Comparative Examples 1 and 2), it may be confirmed that capacity retentions after 100 cycles and capacity retentions after high-temperature storage were significantly reduced in comparison to those of the examples.

Also, in a case in which the second conductive agent was not included, but the CNT, as the first conductive agent, was only included (Comparative Examples 3 and 5), it may be confirmed that capacity retention after 100 cycles and capacity retention after high-temperature storage were significantly reduced in comparison to those of the examples even if the amount thereof was within the range (1wt%) of the present invention (Comparative Example 3), and, in a case in which the excessive amount (2 wt%) was included while the CNT was only included (Comparative Example 5), since the CNTs were not well dispersed and the surface state of the electrode was poor, it was difficult to assemble a cell.

Furthermore, in a case in which the amount of the first conductive agent (CNT) was 0.4 wt%, which was less than the range of the present invention, even if both the first conductive agent (CNT) and the second conductive agent (Super C65 or SFG6L) were included (Comparative Examples 4 and 10), it may be confirmed that capacity retentions after 100 cycles and capacity retentions after high-temperature storage were significantly reduced in comparison to those of the examples, and, in a case in which the amount of the first conductive agent (CNT) was 2 wt%, which was greater than the range of the present invention, even if both the first conductive agent (CNT) and the second conductive agent (Super C65 or SFG6L) were included (Comparative Examples 8 and 9), since the CNTs were not well dispersed and the surface state of the electrode was poor, it was difficult to assemble cells.

Also, in a case in which a product of the amount and the BET specific surface area of the second conductive agent was greater than 100 even if both the first conductive agent (CNT) and the second conductive agent (Super C65 or SFG6L) were included (Comparative Examples 6 and 7), it may be confirmed that capacity retentions after 100 cycles were similar to those of the examples, but capacity retentions after high-temperature storage were significantly reduced.

**Claims**

1. A negative electrode for a lithium secondary battery, the negative electrode comprising a negative electrode collector and a negative electrode active material layer formed on the negative electrode collector, wherein the negative electrode active material layer comprises:

a negative electrode active material which includes a $SiO_x$ composite containing Mg, wherein $0<x<2$;
a line-type conductive agent as a first conductive agent; and
at least one of a point-type conductive agent and a flaky graphite-based conductive agent, as a second conductive agent,
wherein an amount of the first conductive agent is in a range of 0.5 wt% to 1.7 wt% based on a total weight of the negative electrode active material layer, and
a product of an amount in wt% and a BET specific surface area in $m^2/g$ of the second conductive agent has a value of 100 or less,
wherein the line-type conductive agent comprises at least one selected from carbon nanotubes (CNTs) and carbon nanofibers, and
wherein the point-type conductive agent comprises at least one carbon black selected from the group consisting of acetylene black, Ketjen black, channel black, furnace black, lamp black, and thermal black.

2. The negative electrode for a lithium secondary battery of claim 1, wherein the line-type conductive agent, as the first conductive agent, is included in an amount of 0.5 wt% to 1.5 wt% based on the total weight of the negative electrode active material layer.

3. The negative electrode for a lithium secondary battery of claim 1, wherein the negative electrode active material further comprises graphite.

4. The negative electrode for a lithium secondary battery of claim 3, wherein a weight ratio of the silicon oxide composite containing Mg : the graphite is in a range of 1:99 to 50:50.

5. The negative electrode for a lithium secondary battery of claim 1, wherein the silicon oxide composite containing Mg is a silicon oxide composite containing at least one silicate phase selected from the group consisting of $Mg_2SiO_4$ and $MgSiO_3$.

6. The negative electrode for a lithium secondary battery of claim 1, wherein the product of the amount in wt% and the BET specific surface area in $m^2/g$ of the second conductive agent has a value of 30 to 100.

7. The negative electrode for a lithium secondary battery of claim 1, wherein the point-type conductive agent has a BET specific surface area of 30 $m^2/g$ to 1,300 $m^2/g$.

8. The negative electrode for a lithium secondary battery of claim 1, wherein the flaky graphite-based conductive agent has a BET specific surface area of 3 $m^2/g$ to 40 $m^2/g$.

9. The negative electrode for a lithium secondary battery of claim 7, wherein an amount of the point-type conductive agent is 1.6 wt% or less.

10. The negative electrode for a lithium secondary battery of claim 8, wherein an amount of the flaky graphite-based conductive agent is 5.8 wt% or less.

11. The negative electrode for a lithium secondary battery of claim 1, wherein the negative electrode active material layer further comprises a thickener and a binder.

12. The negative electrode for a lithium secondary battery of claim 1, wherein the silicon oxide composite containing Mg comprises a carbon coating layer on a surface thereof.

13. A lithium secondary battery comprising the negative electrode for a lithium secondary battery of claim 1.

**Patentansprüche**

1. Negative Elektrode für eine Lithiumsekundärbatterie, wobei die negative Elektrode einen Kollektor für eine negative Elektrode und eine Aktivmaterialschicht für eine negative Elektrode, die auf dem Kollektor für eine negative Elektrode gebildet ist, umfasst, wobei die Aktivmaterialschicht für eine negative Elektrode umfasst:

   ein Aktivmaterial für eine negative Elektrode, das ein Mg-haltiges $SiO_X$-Komposit einschließt, worin $0<x<2$ ist, ein linienartiges leitfähiges Mittel als ein erstes leitfähiges Mittel und
   mindestens eines von einem punktartigen leitfähigen Mittel und einem leitfähigen Mittel auf Basis eines schuppenförmigen Graphits als ein zweites leitfähiges Mittel,
   wobei eine Menge des ersten leitfähigen Mittels in einem Bereich von 0,5 Gew.-% bis 1,7 Gew.-%, bezogen auf ein Gesamtgewicht der Aktivmaterialschicht für eine negative Elektrode, liegt und
   ein Produkt einer Menge in Gew.-% und einer spezifischen BET-Oberfläche in $m^2/g$ des zweiten leitfähigen Mittels einen Wert von 100 oder weniger aufweist,
   wobei das linienartige leitfähige Mittel mindestens eines, ausgewählt aus Kohlenstoffnanoröhrchen (CNTs) und Kohlenstoffnanofasern, umfasst und
   wobei das punktartige leitfähige Mittel mindestens einen Ruß, ausgewählt aus der Gruppe, bestehend aus Acetylenruß, Ketjenblack, Kanalruß, Ofenruß, Lampenruß und Thermalruß, umfasst.

2. Negative Elektrode für eine Lithiumsekundärbatterie nach Anspruch 1, wobei das linienartige leitfähige Mittel als das erste leitfähige Mittel in einer Menge von 0,5 Gew.-% bis 1,5 Gew.-%, bezogen auf das Gesamtgewicht der Aktivmaterialschicht für eine negative Elektrode, enthalten ist.

3. Negative Elektrode für eine Lithiumsekundärbatterie nach Anspruch 1, wobei das Aktivmaterial für eine negative Elektrode ferner Graphit umfasst.

4. Negative Elektrode für eine Lithiumsekundärbatterie nach Anspruch 3, wobei ein Gewichtsverhältnis Mg-haltiges Siliciumoxidkomposit : Graphit in einem Bereich von 1:99 bis 50:50 liegt.

5. Negative Elektrode für eine Lithiumsekundärbatterie nach Anspruch 1, wobei das Mg-haltige Siliciumoxidkomposit ein Siliciumoxidkomposit ist, das mindestens eine Silikatphase, ausgewählt aus der Gruppe, bestehend aus $Mg_2SiO_4$ und $MgSiO_3$, enthält.

6. Negative Elektrode für eine Lithiumsekundärbatterie nach Anspruch 1, wobei das Produkt der Menge in Gew.-% und der spezifischen BET-Oberfläche in $m^2/g$ des zweiten leitfähigen Mittels einen Wert von 30 bis 100 aufweist.

7. Negative Elektrode für eine Lithiumsekundärbatterie nach Anspruch 1, wobei das punktartige leitfähige Mittel eine spezifische BET-Oberfläche von 30 $m^2/g$ bis 1.300 $m^2/g$ aufweist.

8. Negative Elektrode für eine Lithiumsekundärbatterie nach Anspruch 1, wobei das leitfähige Mittel auf Basis eines schuppenförmigen Graphits eine spezifische BET-Oberfläche von 3 $m^2/g$ bis 40 $m^2/g$ aufweist.

9. Negative Elektrode für eine Lithiumsekundärbatterie nach Anspruch 7, wobei eine Menge des punktartigen leitfähigen Mittels 1,6 Gew.-% oder weniger beträgt.

10. Negative Elektrode für eine Lithiumsekundärbatterie nach Anspruch 8, wobei eine Menge des leitfähigen Mittels auf Basis eines schuppenförmigen Graphits 5,8 Gew.-% oder weniger beträgt.

11. Negative Elektrode für eine Lithiumsekundärbatterie nach Anspruch 1, wobei die Aktivmaterialschicht für eine negative Elektrode ferner einen Verdicker und ein Bindemittel umfasst.

12. Negative Elektrode für eine Lithiumsekundärbatterie nach Anspruch 1, wobei das Mg-haltige Siliciumoxidkomposit eine Kohlenstoffbeschichtungsschicht auf seiner Oberfläche umfasst.

13. Lithiumsekundärbatterie, umfassend die negative Elektrode für eine Lithiumsekundärbatterie nach Anspruch 1.

**Revendications**

1. Électrode négative pour une batterie secondaire au lithium, l'électrode négative comprenant un collecteur d'électrode négative et une couche de matériau actif d'électrode négative formée sur le collecteur d'électrode négative, dans laquelle la couche de matériau actif d'électrode négative comprend :

   un matériau actif d'électrode négative qui inclut un composite de $SiO_x$ contenant du Mg, dans laquelle 0 < x < 2 ;
   un agent conducteur de type ligne en tant que premier agent conducteur ; et
   au moins l'un d'un agent conducteur de type point et d'un agent conducteur floconneux à base de graphite, en tant que deuxième agent conducteur,
   dans laquelle une quantité du premier agent conducteur est dans une plage de 0,5 % en poids à 1,7 % en poids sur la base d'un poids total de la couche de matériau actif d'électrode négative, et
   un produit d'une quantité en % en poids et d'une surface spécifique BET en $m^2/g$ du deuxième agent conducteur a une valeur de 100 ou moins,
   dans laquelle l'agent conducteur de type ligne comprend au moins un sélectionné parmi des nanotubes de carbone (CNT) et des nanofibres de carbone, et
   dans laquelle l'agent conducteur de type point comprend au moins un noir de carbone sélectionné dans le groupe constitué d'un noir d'acétylène, d'un noir de Ketjen, d'un noir de tunnel, d'un noir de fourneau, d'un noir de fumée et d'un noir thermique.

2. Électrode négative pour une batterie secondaire au lithium selon la revendication 1, dans laquelle l'agent conducteur de type ligne, en tant que premier agent conducteur, est inclus en une quantité de 0,5 % en poids à 1,5 % en poids sur la base du poids total de la couche de matériau actif d'électrode négative.

3. Électrode négative pour une batterie secondaire au lithium selon la revendication 1, dans laquelle le matériau actif d'électrode négative comprend en outre du graphite.

4. Électrode négative pour une batterie secondaire au lithium selon la revendication 3, dans laquelle un rapport pondéral du composite d'oxyde de silicium contenant du Mg : le graphite est dans une plage de 1:99 à 50:50.

5. Électrode négative pour une batterie secondaire au lithium selon la revendication 1, dans laquelle le composite d'oxyde de silicium contenant du Mg est un composite d'oxyde de silicium contenant au moins une phase silicate sélectionnée dans le groupe constitué de $Mg_2SiO_4$ et $MgSiO_3$.

6. Électrode négative pour une batterie secondaire au lithium selon la revendication 1, dans laquelle le produit de la quantité en % en poids et de la surface spécifique BET en $m^2/g$ du deuxième agent conducteur a une valeur de 30 à 100.

7. Électrode négative pour une batterie secondaire au lithium selon la revendication 1, dans laquelle l'agent conducteur de type point a une surface spécifique BET de 30 $m^2/g$ à 1 300 $m^2/g$.

8. Électrode négative pour une batterie secondaire au lithium selon la revendication 1, dans laquelle l'agent conducteur floconneux à base de graphite a une surface spécifique BET de 3 $m^2/g$ à 40 $m^2/g$.

9. Électrode négative pour une batterie secondaire au lithium selon la revendication 7, dans laquelle une quantité de l'agent conducteur de type point est de 1,6 % en poids ou moins.

10. Électrode négative pour une batterie secondaire au lithium selon la revendication 8, dans laquelle une quantité de l'agent conducteur floconneux à base de graphite est de 5,8 % en poids ou moins.

11. Électrode négative pour une batterie secondaire au lithium selon la revendication 1, dans laquelle la couche de matériau actif d'électrode négative comprend en outre un épaississant et un liant.

12. Électrode négative pour une batterie secondaire au lithium selon la revendication 1, dans laquelle le composite d'oxyde de silicium contenant du Mg comprend une couche de revêtement de carbone sur une surface de celui-ci.

13. Batterie secondaire au lithium comprenant l'électrode négative pour une batterie secondaire au lithium selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020180159388
- EP 3029759 A1
- WO 2018123624 A1
- WO 2018097213 A1
- KR 1586816 B